# FASCICULE DE BREVET EUROPEEN

(11) **EP 1 318 762 B1**
(45) Date de publication et mention de la délivrance du brevet: **02.05.2007**
(21) Numéro de dépôt: 01972147.1
(22) Date de dépôt: 12.09.2001
(51) Int. Cl.: A61C 7/36, A61C 7/28

(54) **APPAREIL ORTHODONTIQUE A BIELLES**
ORTHODONTISCHES GERÄT MIT TREIBSTANGE
ORTHODONTIC APPARATUS WITH RODS

(30) Priorité: 14.09.2000 FR 0011700
(43) Date de publication de la demande: 18.06.2003
(73) Titulaire: Callabe, Elie, 41350 Vineuil (FR); Morin, Jean Charles, 41110 Saint Aignan (FR)
(72) Inventeur: Callabe, Elie, 41350 Vineuil (FR); Morin, Jean Charles, 41110 Saint Aignan (FR)
(74) Mandataire: Lavé, Michèle
(86) Numéro de dépôt international: PCT/FR2001/002828
(87) Numéro de publication internationale: WO 2002/022040

(56) Documents cités:
- WO-A-96/04864
- FR-A- 2 760 631

## Description

La présente invention concerne le domaine des appareils orthodontiques amovibles et plus particulièrement un système de bielles utilisé en orthodontie pour induire l'avancée de la mâchoire inférieure.

Le principe de traitement des décalages maxillomandibulaires consiste à utiliser des appareils orthodontiques qui propulsent la mandibule vers l'avant avec une prise d'appui sur le maxillaire afin d'obtenir une stimulation de la croissance mandibulaire vers l'avant et une diminution de la croissance vers l'avant du maxillaire supérieur. On utilise à cet effet des appareils appropriés.

On connaît en particulier le système de Herbst constitué deux gouttières reliées par deux bielles comprenant chacune une partie mâle et une partie femelle. La partie femelle est fixée sur la mâchoire supérieure et la partie mâle est fixée sur la mandibule. L'extrémité de chacune de ces parties comporte un oeilleton. Les bielles sont fixées sur les gouttières par l'intermédiaire d'une vis passant dans l'oeilleton et vissée sur une armature métallique intégrée dans la gouttière au niveau de l'arc externe.

On connaît également les bielles décrites dans le brevet FR2760631 qui peuvent s'adapter aussi bien sur un appareil multi-attaches fixe que sur un appareil à gouttières amovibles.
Ces bielles sont caractérisées par le fait que la partie femelle est terminée par une boucle qui peut être fixée au niveau de la mâchoire supérieure par un crochet boule et par le fait que la partie mâle se termine par une boucle qui est fermée par sertissage par exemple autour d'un crochet boule, situé au niveau de la mandibule et faisant un angle de 90° avec cette boucle.

On connaît d'autres systèmes, tels que ceux décrits dans les brevets FR2754171, WOOO1048, US5944518, US5879157, mais ils comportent tous des dispositifs de fixation au niveau de la mandibule qui sont perpendiculaires aux dents de la mandibule. On connait par ailleur des systèmes tels que celui décrit dans le brevet FR 2 760 631.

Les appareils amovibles connus présentent entre les autres les inconvénients suivants :
- lourds, peu confortables et difficiles à supporter
- inesthétiques car ils déforment le visage de l'enfant (effet hamster)
- perturbent certaines fonctions orales, comme l'élocution, la phonation, l'occlusion labiale, etc.
- gouttières en résine recouvrant entièrement les surfaces occlusales des dents supérieures et inférieures, donc sensibles à la casse et non adaptées à une denture instable
- présence de pas de vis, de vis ou de crochets trop proéminents qui blessent la muqueuse de la lèvre et de la joue, etc.

Les présents inventeurs ont donc mené des études poussées pour mettre au point un appareil pour le traitement des décalages maxillaires antéro-postérieurs permettant de résoudre les problèmes liés aux appareils existants.

La présente invention telle que définie par la revendication 1, concerne un appareil pour le traitement des décalages maxillaires antéro-postérieurs utilisant deux bielles fixées par une clavette en forme de crochet boule passant dans un tube soudé sur l'armature métallique d'un appareil orthodontique. Ces bielles sont caractérisées par le fait qu'elles sont constituées par un tube comportant à son extrémité un méplat, par exemple perpendiculaire à l'axe du tube et percé d'un oeillet dans lequel passe le crochet boule. Les bielles utilisées sont légères, fines et peu encombrantes.

L'invention sera mieux comprise à la lumière des dessins annexés 1 à 4.

La figure 1 représente le positionnement d'un appareil sur des moulages dentaires.

La figure 2 représente le système de deux bielles télescopiques permettant de relier la partie supérieure et la partie inférieure d'un appareil orthodontique.

La figure 3 représente le système de fixation des bielles sur l'armature de deux gouttières amovibles.

La figure 4 représente la fixation d'une bielle à un autre appareil orthodontique amovible largement utilisé.

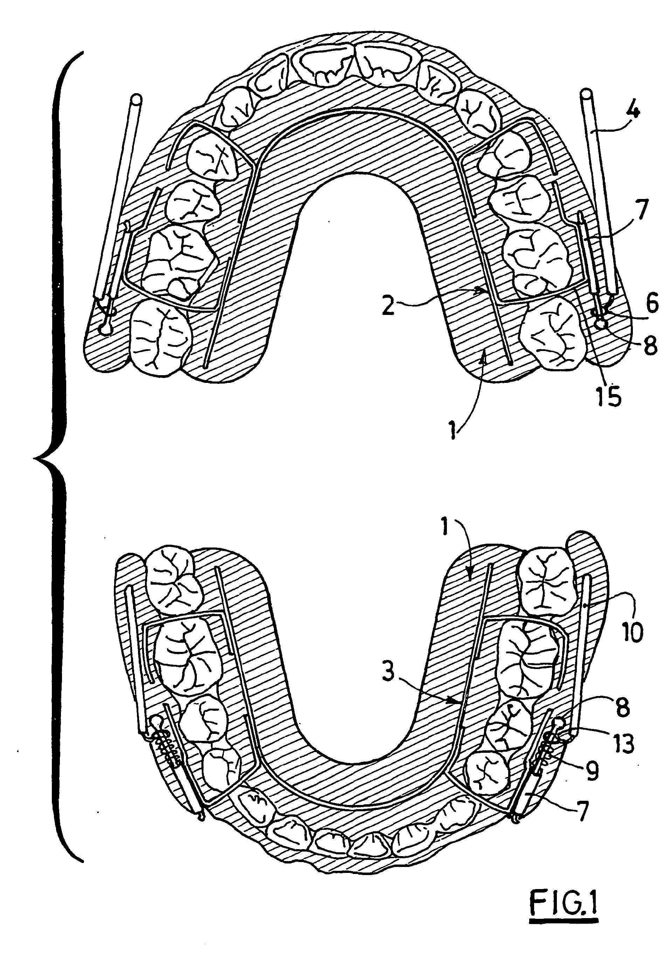

La figure 1 représente une vue de dessous des appareils supérieur et inférieur placés sur des moulages dentaires.

On a représenté les gouttières amovibles (1) en résine dans lesquelles sont noyées une armature métallique supérieure (2) et une armature métallique inférieure (3).

Sur l'armature de la gouttière supérieure (2) est fixée une bielle femelle (4) par l'intermédiaire d'un crochet boule (8) passant dans un oeillet (6) de la bielle (4) et dans un tube (7) soudé à l'armature métallique supérieure (2). Sur l'armature de la gouttière inférieure (3) est fixée une bielle mâle (10) par l'intermédiaire d'un crochet boule (8) passant dans un oeillet (13) de la bielle (10) et dans un tube (7) soudé à l'armature métallique inférieure.

Pour l'appareil inférieur, le tube (7) est soudé à l'armature métallique au niveau des premières prémolaires inférieures. Pour l'appareil supérieur, le tube (7) est soudé sur l'armature métallique au niveau de la molaire supérieure.

En variante, on peut prévoir de glisser entre l'oeillet (13) de la bielle mâle (10) et le tube (7) soudé à l'armature de l'appareil inférieur, un ressort de compression (9) dont le but est de rendre les forces de propulsion plus légères et de permettre une liberté de mouvement de la mandibule en rétro-position.

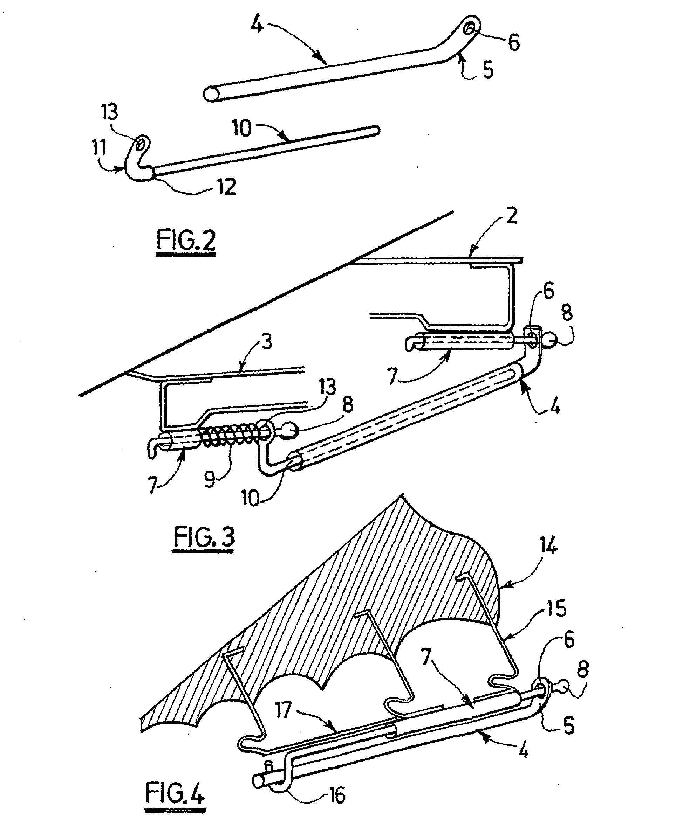

La figure 2 représente le système constitué des deux bielles télescopiques permettant de relier la partie supérieure et la partie inférieure d'un appareil orthodontique. La bielle femelle (4) est un tube creux dont l'une des extrémités est un tube aplati (5) percé par un oeillet (6) et formant avec le tube creux un angle compris entre 90° et 120°, en particulier égal à 90°. La bielle mâle (10) est une tige dont une extrémité comporte un tube aplati (11) soudé à la tige par une soudure (12). Le tube aplati (11) est percé par un oeillet (13) et il forme avec la bielle (10) un angle compris entre 60° et 90°, en particulier égale à 90°. La tige de la bielle (10) coulisse dans le tube de la bielle (4).

La figure 3 représente le système de fixation des bielles sur l'armature de deux gouttières amovibles. La bielle femelle (4) est fixée à l'armature métallique de la gouttière supérieure (2) par l'intermédiaire d'une clavette en forme de crochet boule (8) passant l'oeillet (6) et dans le tube (7) soudé à l'armature métallique (2). La bielle mâle (10) est fixée à l'armature métallique de la gouttière inférieure (3) par l'intermédiaire d'une clavette en forme de crochet boule (8) passant dans l'oeillet (13) et dans le tube (7) soudé à l'armature métallique (3).

La tige de la bielle (10) coulisse dans le tube de la bielle (4). Les deux gouttières sont fixées dans la position souhaitée par pliage de l'extrémité libre des crochets boule (8) . Les extrémités pliées des crochets boule sont recouvertes de résine et ainsi elles ne blessent pas la lèvre et la joue.

Sur la figure 4, on représente le principe du système de fixation des bielles sur un seul appareil orthodontique (appareil supérieur). L'appareil est constitué d'une base en résine (14) dans laquelle sont fixés des crochets métalliques (15). La fixation de la bielle (4) à l'appareil se fait comme dans le cas des autres figures par l'intermédiaire du crochet boule (8), qui passe dans l'oeillet (6) puis dans le tube (7) soudé sur le crochet (15).

Le crochet boule (8) est terminé par une boucle (16) entourant la bielle femelle (4) et permettant le blocage de l'extrémité libre de la bielle femelle supérieure. Ceci permet à l'enfant de porter l'appareil supérieur seul le jour et de connecter pour la nuit une gouttière inférieure, ce qui était impossible avec les propulseurs amovibles classiques connus.

On peut de plus prévoir une soudure entre le crochet boule (8) et la tige d'Adams (17). Ceci donne une rigidité au système. Ainsi le crochet boule (8) ne peut pas tourner.

La figure 4 montre l'universalité du système de fixation des bielles qui permet d'utiliser différents appareils connus.

Dans un mode de réalisation de l'invention, les appareils amovibles sont constitués par deux gouttières en résine thermoformée dans laquelle est noyée une armature métallique constituée de barres métalliques occlusales qui relient l'arc interne avec l'arc externe.
Dans un mode de réalisation préféré, les surfaces occlusales des gouttières ne sont pas recouvertes de résine. Ainsi le propulseur est allégé et son armature métallique lui confère une rigidité et une robustesse suffisante pour qu'on puisse ne pas recouvrir de résine les faces occlusales dentaires.

Le fait que les dents ne se ferment pas sur de la résine résine évite la casse de l'appareil et permet une fonction occlusale dentaire normale sans gêne pour la phonation ou la déglutition. La légèreté de l'appareil le rend plus facile à accepter aussi bien le jour que la nuit.

L'évidemment au niveau de la surface supérieure des dents permet aux dents de lait de tomber et aux dents définitives de pousser guidées par le trou de la gouttière. L'appareil est donc adapté à la denture instable des enfants et il peut être porté même lorsqu'une dent de lait commence à bouger et devient sensible.

Dans un autre mode de réalisation, l'une des gouttières ou les deux ne comportent pas de bandeau antérieur.

Dans un autre mode de réalisation, les surfaces dentaires sont recouvertes de résine.
Le système de bielles décrit dans la présente invention peut s'adapter sur les crochets métalliques de tout type d'appareil amovible supérieur, comme les écarteurs palatins, les écrans linguaux ou les enveloppes linguales nocturnes, qui comportent des crochets dits d'Adams. Ainsi, en reliant à inférieure à l'appareil supérieur, on peut opérer une propulsion mandibulaire en même temps qu'une expansion maxillaire. Le système de bielles peut donc être adapté sur des appareils anciens peu onéreux à fabriquer.
La même invention n'est pas limitée aux modes de réalisation décrits dans la description et les figures. Elle englobe au contraire toutes les variantes dans la limite des revendications annexées.

## Revendications

1. - Appareil orthodontique amovible à bielles comprenant :
- une partie supérieure et une partie inférieure comprenant chacune une armature métallique (2, 3, 15) ;
- une bielle femelle (4) et une bielle mâle (10), la bielle mâle coulissant dans la bielle femelle ;
- la bielle femelle (4) étant fixée à l'armature métallique supérieure (2, 15) par une clavette en forme de crochet boule (8) passant dans un tube (7) soudé sur l'armature métallique supérieure (2, 15) ;
**caractérisé en ce que** la bielle mâle (10) est fixée à l'armature métallique inférieure (3) par une clavette en forme de crochet boule (8) passant dans un tube (7) soudé sur l'armature métallique inférieure (3).

2. - Appareil orthodontique amovible à bielles selon la revendication 1, **caractérisé en ce que** la partie supérieure est un appareil à crochets d'Adams, dans lequel le tube (7) est soudé audits crochets d'Adams (15) et le crochet boule (8) est terminé par une boucle (16) entourant la bielle femelle (4).

3. - Appareil orthodontique amovible à bielles selon la revendication 2, **caractérisé en ce que** le crochet boule (8) est soudé sur la tige d'Adams (17).

4. - Appareil orthodontique amovible à bielles selon l'une des revendications 1 à 3, **caractérisé en ce que** la bielle femelle (4) est un tube creux dont l'une des extrémités est un tube aplati (5) percé par un oeillet (6).

5. - Appareil orthodontique amovible à bielles selon la revendication 4, **caractérisé en ce que** le tube aplati (5) forme avec le tube creux un angle compris entre 90° et 120°.

6. - Appareil orthodontique amovible à bielles selon la revendication 1, **caractérisé en ce que** la bielle mâle (10) est une tige dont une extrémité comporte un tube aplati (11) soudé à la tige par une soudure (12) et percé par un oeillet (13).

7. - Appareil orthodontique amovible à bielles selon la revendication 6, **caractérisé en ce que** le tube aplati (11) forme avec la tige un angle compris entre 60° et 90°.

8. - Appareil orthodontique amovible à bielles selon l'une des revendications 1 à 7, **caractérisé en ce qu'**un ressort de compression (9) est glissé entre l'oeillet (13) de la bielle mâle (10) et le tube (7) soudé à l'armature métallique (3) de la partie inférieure.

## Claims

1. Removable orthodontic apparatus with rods, comprising:
- an upper part and a lower part, each comprising a metal frame (2, 3, 15);
- a female rod (4) and a male rod (10), the male rod sliding in the female rod;
- the female rod (4) being fixed to the upper metal frame (2, 15) by a key in the form of a ball-hook (8) passing through a tube (7) welded onto the upper metal frame (2, 15);
**characterized in that** the male rod (10) is fixed to the lower metal frame (3) by a key in the form of a ball-hook (8) passing through a tube (7) welded onto the lower metal frame (3).

2. Removable orthodontic apparatus with rods according to Claim 1, **characterized in that** the upper part is an apparatus with Adams hooks, the tube (7) being welded onto said Adams hooks (15), and the ball-hook (8) being terminated by a buckle (16) enclosing the female rod (4).

3. Removable orthodontic apparatus with rods according to Claim 2, **characterized in that** the ball-hook (8) is welded onto the Adams shaft (17).

4. Removable orthodontic apparatus with rods according to any one of Claims 1 to 3, **characterized in that** the female rod (4) is a hollow tube, of which one of the ends is a flattened tube (5) perforated with an eyelet (6).

5. Removable orthodontic apparatus with rods according to Claim 4, **characterized in that** the flattened tube (5) forms, with the hollow tube, an angle of between 90° and 120°.

6. Removable orthodontic apparatus with rods according to Claim 1, **characterized in that** the male rod (10) is a shaft, one end of which comprises a flattened tube (11) welded to the shaft via a weld (12) and perforated with an eyelet (13).

7. Removable orthodontic apparatus with rods according to Claim 6, **characterized in that** the flattened tube (11) forms, with the shaft, an angle of between 60° and 90°.

8. Removable orthodontic apparatus with rods according to any one of Claims 1 to 7, **characterized in that** a compression spring (9) is slid between the eyelet (13) of the male rod (10) and the tube (7) welded onto the metal frame (3) of the lower part.

## Patentansprüche

1. Entfernbares orthodontisches Gerät mit Treibstangen, das Folgendes aufweist:
- einen oberen Teil und einen unteren Teil mit jeweils einem Metallgerüst (2, 3, 15),
- eine Aufnahmetreibstange (4) und eine Stecktreibstange (10), die in der Aufnahmetreibstange gleitet,
- wobei die Aufnahmetreibstange (4) über ein Verankerungselement in Form eines Kugelhakens (8), das durch eine an das obere Metallgerüst (2, 15) angeschweißte Röhre (7) geht, an dem oberen Metallgerüst (2, 15) befestigt ist,
**dadurch gekennzeichnet, dass** die Stecktreibstange (10) über ein Verankerungselement in Form eines Kugelhakens (8), das durch eine an das untere Metallgerüst (3) angeschweißte Röhre (7) geht, an dem unteren Metallgerüst (3) befestigt ist.

2. Entfernbares orthodontisches Gerät mit Treibstangen nach Anspruch 1, **dadurch gekennzeichnet, dass** es sich bei dem oberen Teil um ein Gerät mit Adamsklammern handelt, bei dem die Röhre (7) an die Adamsklammern (15) angeschweißt und der Kugelhaken (8) durch eine die Aufnahmetreibstange (4) umgebende Schlinge (16) abgeschlossen ist.

3. Entfernbares orthodontisches Gerät mit Treibstangen nach Anspruch 2, **dadurch gekennzeichnet, dass** der Kugelhaken (8) an der Adamsstange (17) angeschweißt ist.

4. Entfernbares orthodontisches Gerät mit Treibstangen nach einem der Ansprüche 1 bis 3, **dadurch gekennzeichnet, dass** es sich bei der Aufnahmetreibstange (4) um eine hohle Röhre handelt, deren eines Ende eine abgeflachte Röhre (5) ist, durch die eine Öse (6) geht.

5. Entfernbares orthodontisches Gerät mit Treibstangen nach Anspruch 4, **dadurch gekennzeichnet, dass** die abgeflachte Röhre (5) mit der hohlen Röhre einen Winkel zwischen 90° und 120° einschließt.

6. Entfernbares orthodontisches Gerät mit Treibstangen nach Anspruch 1, **dadurch gekennzeichnet, dass** es sich bei der Stecktreibstange (10) um eine Stange handelt, deren eines Ende eine abgeflachte Röhre (11) aufweist, die über eine Schweißnaht (12) an der Stange angeschweißt ist und durch die eine Öse (13) geht.

7. Entfernbares orthodontisches Gerät mit Treibstangen nach Anspruch 6, **dadurch gekennzeichnet, dass** die abgeflachte Röhre (11) mit der Stange einen Winkel zwischen 60° und 90° einschließt.

8. Entfernbares orthodontisches Gerät mit Treibstangen nach einem der Ansprüche 1 bis 7, **dadurch gekennzeichnet, dass** zwischen die Öse (13) der Stecktreibstange (10) und der an das Metallgerüst (3) des unteren Teils angeschweißten Röhre (7) eine Druckfeder (9) geschoben ist.
